(19) Europäisches Patentamt
European Patent Office
Office européen des brevets

(11) **EP 2 731 033 B1**

(12) **EUROPEAN PATENT SPECIFICATION**

(45) Date of publication and mention
of the grant of the patent:
**03.02.2016 Bulletin 2016/05**

(51) Int Cl.:
***G06F 17/50*** *(2006.01)*

(21) Application number: **12191531.8**

(22) Date of filing: **07.11.2012**

(54) **Construction method for resilient ICs**

Konstruktionsverfahren für fehlertolerante integrierte Schaltungen

Procédé de construction de circuits intégrés résistants

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.05.2014 Bulletin 2014/20**

(73) Proprietor: **Deutsche Telekom AG**
**53113 Bonn (DE)**

(72) Inventors:
• **Bayer, Christoph**
**10439 Berlin (DE)**
• **Seifert, Jean-Pierre**
**10587 Berlin (DE)**

(74) Representative: **Vossius & Partner**
**Patentanwälte Rechtsanwälte mbB**
**Siebertstrasse 3**
**81675 München (DE)**

(56) References cited:
• **GAL A ET AL: "FAULT TOLERANT CIRCUITS AND PROBABILISTICALLY CHECKABLE PROOFS",** PROCEEDINGS OF THE 10TH. ANNUAL STRUCTURE IN COMPLEXITY THEORY CONFERENCE. MINNEAPOLIS, JUNE 19 - 22, 1995; [PROCEEDINGS OF THE ANNUAL STRUCTURE IN COMPLEXITY THEORY CONFERENCE. (FROM 1996 ONWARDS: CONFERENCE ON COMPUTATIONAL COMPLEXITY)], LOS ALAMIT, vol. CONF. 10, 19 June 1995 (1995-06-19), pages 65-73, XP000544448, ISBN: 978-0-7803-2565-4
• **MOHAMMAD TEHRANIPOOR ET AL: "Trustworthy Hardware: Trojan Detection and Design-for-Trust Challenges",** COMPUTER, vol. 44, no. 7, 1 July 2011 (2011-07-01), pages 66-74, XP055057878, ISSN: 0018-9162, DOI: 10.1109/MC. 2010.369

EP 2 731 033 B1

## Description

## Technical Field

The invention relates to the area of reliable and fault-tolerant integrated circuit (IC) design. In particular, the invention is related to a computer-implemented method for constructing a fault-tolerant integrated circuit (IC), a system for constructing a fault-tolerant integrated circuit, and a fault-tolerant integrated circuit. Specifically, the invention is related to a construction method for resilient ICs that can counteract malicious alterations to the IC after the design phase. A resilient IC according to the invention guarantees its proper functioning even if it is maliciously altered to a certain extent. That means the resilient IC is fault-tolerant against deliberate, non-random faults and hence, it can counteract the emerging threat of hardware Trojans.

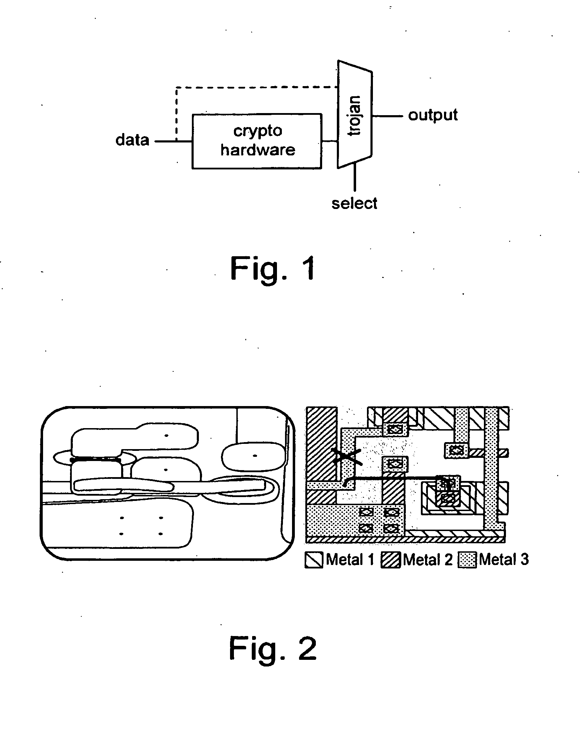

ICs are becoming more and more vulnerable to malicious alterations, known as hardware Trojans, as many in-house steps of an IC fabrication process are being outsourced to third parties. These hardware Trojans may impede ICs from functioning properly. In Figs. 1 and 2, examples of hardware Trojans are shown. When the Trojan in Fig. 1 is activated, the data is sent to the output in plaintext. In Fig. 2, an infected IC, which is realized via FIB (Focused Ion Beam), is displayed. The right side shows the intended layout with three metal layers for the correct design, where malicious design alterations are marked by dashed and dotted lines. Left, an X-ray of the modified silicon is shown, where a line in metal 1 was cut (dashed cross in layout) and was instead connected to another via (dotted bridge in layout). In terms of the taxonomy from Ref. [9] this Trojan was realized via FIB post fabrication on the physical level, which is always on, changes the functionality and can affect all elements of a system (processor, memory, I/O, power supply, and the clock grid).

Clearly, for all mission critical areas it is essential to use computer systems that ensure their correct functionality in all circumstances. Thus, a reasonable and challenging question is whether ICs can be designed in such a way that the functionality intended by the designers is guaranteed even if a malicious adversary is allowed to tamper with the ICs during certain production steps. However, the hardware Trojans lie outside the classical fault model by von Neumann since they closely resemble deliberately inserted faults. There is no implemented fault-tolerant IC design, which ensures the proper functioning of an IC even in the presence of such deliberate, non-random faults.

## Background Art

Up to date there is no fault-tolerant IC design that can counteract hardware Trojans and the corresponding deliberate faults. The present invention extends and rounds out Gál and Szegedy's model of faulty gates for Boolean circuits. Their model is limited to Boolean circuits and the malicious alteration of gates only. However, the model of Gál and Szegedy is not directly applicable on arbitrary integrated circuits. In this context, it should be noted that the concept of an "integrated circuit" is more general than the concept of a "Boolean circuit", i.e., these notions must be carefully distinguished from each other (cf. the respective definitions given below). Moreover, the malicious alteration of wires is not considered in the model of Gál and Szegedy. Thus, it is not applicable to a real-world scenario. Fault-tolerant constructions in chip design are usually based on a model of randomly distributed faults. These constructions are not applicable either to a scenario of deliberately and maliciously induced faults.

Research in the area of fault-tolerant circuits has mainly been based on the model of random faults by von Neumann [13]. In this model it is assumed that all gates of a Boolean circuit fail, i.e., produce a faulty value, independently and with probability bounded by some small constant. This scenario is examined well and fault-tolerant constructions are implemented in practice to counteract natural random errors [6, 11, 13]. There is a theoretical contribution by Gál and Szegedy on fault-tolerant Boolean circuit design addressing deliberate, non-random faults [7]. In their model, an adversary may arbitrarily choose a small constant fraction of the gates at each level of a Boolean circuit to be faulty. They introduce a constructive way to efficiently build fault-tolerant Boolean circuits with small redundancy even in the presence of non-random faulty gates.

Thus, there is a need for fault-tolerant integrated circuits being fault-tolerant not only with respect to random faults, but also with respect to deliberately and maliciously induced faults. Also, there is a need for a method for constructing such a fault-tolerant integrated circuit as well as a need for a system for constructing such a fault-tolerant integrated circuit.

The above described objectives are achieved by the fault-tolerant integrated circuit (IC), the computer-implemented method for constructing a fault-tolerant integrated circuit, and the system for constructing a fault-tolerant integrated circuit as disclosed by the claims presented in this document.

The present invention provides a method for designing resilient ICs. Here and in the following, the term "resilient IC" shall refer to an IC with the required characteristic that the IC is fault-tolerant not only with respect to random faults, but also with respect to deliberately and maliciously induced faults. By the method of the invention, every IC can be transformed into a resilient IC that computes the same function as the original circuit even in the presence of an adversary tampering with it. This finding is highly relevant to industries, in which trust in computer systems is crucial. In particular, hardware Trojans have drawn attention to the potential threats to governmental and military systems as well as financial infrastructure and transportation security. By the design method according to the invention, ICs can be designed in such a way that the functionality intended by the designers is guaranteed. This method can be applied to that scenario, in which the design process is trusted, but the subsequent production steps are not trustworthy. Due to the so called "fabless" trend in semiconductor industries, this scenario is the most relevant one as outsourcing to silicon foundries is by virtue untrusted. Hence, the new method can be applied to develop highly reliable ICs for mission critical computer systems.

In our new method, it can be assumed that a certain fraction of gates and wires are maliciously altered. That means, in the new method all components of a circuit may be tampered with by an adversary. Additionally, as already discussed, the new method is adapted to ICs, not only to Boolean circuits. Still, the proper functioning of the IC is guaranteed, if the IC is altered not more than to a certain extent.

## Definitions

The following definitions will be used throughout the remainder of this document.

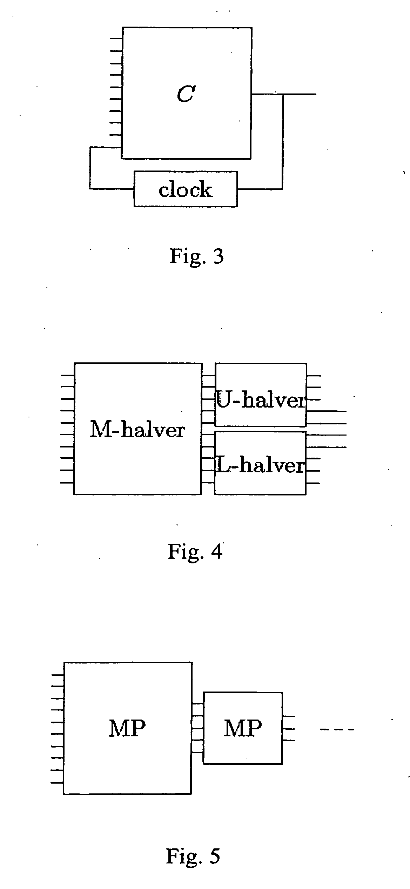

A *Boolean circuit C* with $N_l$ input bits and one output bit is defined as an acyclic directed graph, in which every vertex (called *gate*) corresponds to either a Boolean function from the *set B* = {A*ND, OR, NOT*} or an input gate (of in-degree 0) labeled by one of the $N_l$ input bits. Every edge represents a wire. One gate is labeled as output gate. A Boolean circuit *C* computes a *Boolean function f* : $\{0,1\}^{N_l} \rightarrow \{0, 1\}$. It is assumed that *AND* and *OR* gates have in-degree 2, *NOT* gates have in-degree 1, and all gates have a maximum out-degree of 2. A *combinational* (or *combinatorial*) circuit with $N_l$ inputs and one output is a Boolean circuit *C* with $N_l$ input bits $x_1, ..., x_{N_l}$ and one output bit *z*. A circuit is called *synchronous* (or *synchronized*), if for any gate *g* all paths from the inputs to *g* have the same length. Let *C* be a circuit and let *g* be any gate in *C*. The *depth* of *g* is the length of the longest path from any input to *g* and the *circuit depth D*(*C*) is defined as the maximal depth of an output gate. The *size S*(*C*) of a circuit *C* is defined as the total number of gates it consists of. The *i*-th level of a circuit consists of all gates with depth equal to *i*. A circuit *C* is synchronous, if and only if every wire in *C* is between adjacent levels. An integrated circuit (IC) is composed of combinational logic having some inputs, which are output derived. There may also be independent inputs. All or some of the outputs are fed back into the input. In the following, it is denoted by *C* the combinational logic of an IC, and it is assumed that *C* is a synchronous circuit. For simplicity, only ICs with one output bit are considered. This single output bit may be clocked is fed back into the input. In Fig. 3, a sketch of an IC is given.

*Loose computation:* Let *f* : $\{0,1\}^n \rightarrow \{0,1\}$ be a Boolean function, and *M* be any computational device. We say that *M δ-loosely computes f*, if the following holds:

1. If *f*(*x*) =1, then *M*(*x*) =1.

2. If *f*(*y*) = 0 for every *y* with $d(x,y) \le \delta n$, then *M*(*x*) = 0,

where *d*(*x, y*) denotes the Hamming distance between *x* and *y*. If an input *x* does not belong to one of the two categories, *M* can output an arbitrary value or no value at all. Combined with an appropriate error correcting code, this loose computation behaves just like the usual evaluation of the given function.

For $E_n$ being an error correcting code with codewords of length $q_n$ and a function *f* : $\{0,1\}^n \rightarrow \{0,1\}$, it be defined the function $f \circ E_n$ : $\{0,1\}^{q_n} \rightarrow \{0,1\}$ as follows:

1. ($f \circ E_n$)(*z*) = 0 for all *z* where *z* is not a codeword of $E_n$.
2. If *z* = $E_n$(*x*), then ($f \circ E_n$)(*z*) = *f*(*x*).

If the Hamming distance of any two codewords in an error correcting code $E_n$ with codewords of length $q_n$ is at least $\delta q_n$ and *M* is a computational device that computes $f \circ E_n$ in a δ-loose manner, then $M(E_n$ (*x*)) = *f*(*x*) on any input *x*.

It is known from coding theory, cf. Ref. [10], that there exist linear binary codes $E_n$ with the following properties:

1. The matrix of $E_n$ can be polynomially computed in *n*. (This also means that the length of the codeword $q_n$ is polynomial in *n*.)
2. The Hamming distance of any two codewords in $E_n$ is at least $\delta q_n$ for some small constant δ.

An *ε-halver* is a bounded depth comparator network with the following property: For any set of the *l* smallest (largest) inputs, where $l \le n/2$, at most ε*l* elements will be among the last (first) *n*/2 outputs. Equivalently, an *ε-halver* can be defined as a halver (a network that separates the *n*/2 largest and the *n*/2 smallest inputs into two disjoint sets) that may misplace at most an ε fraction of the elements.

The *threshold function* $\mathrm{Th}_k^n$ has value 1, if and only if at least *k* of the *n* input bits have value 1. Without loss of generality it is assumed that *n* is a power of 2. Otherwise, if *n* is not a power of 2, the threshold function $\mathrm{Th}_{\tilde{k}}^{\tilde{n}}$ is considered where $\tilde{n}$ is the smallest power of 2, which is greater than *n*, and $\tilde{k} := k + \tilde{n} - n$. The additional $\tilde{n} - n$ inputs to $\mathrm{Th}_{\tilde{k}}^{\tilde{n}}$ are fixed to value 1 each. Then, $\mathrm{Th}_{\tilde{k}}^{\tilde{n}}$ is equivalent to $\mathrm{Th}_k^n$.

The *overwhelming majority function* $\mathrm{Maj}_k^m$ has value 1 (respectively 0), if the number of 1's (0's) in the input is at least *k*, and it is undefined otherwise. Preferably, for each of the inputs of the overwhelming majority functions used for the construction of the threshold functions-and thus also for the construction of the integrated circuits-as described below, the number of input bits is a power of 2.

## Summary of the Invention

The IC design method relies on the extended and enhanced work by Gál and Szegedy on fault-tolerant circuits [7]. In order to design reliable ICs, the circuits are provided with more redundancy and robustness by techniques from the area of probabilistically checkable proofs (PCPs) [4] and from sorting networks [1]. This description is restricted to ICs with a single output bit, but it can be generalized straightforwardly. In a real-world scenario, an attacker would only slightly alter a computer chip, since large-scale alterations would later be detected during the testing phase. Thus, the concept for a resilient IC design according to the invention fulfils the requirement that small changes to the IC do not affect its correct functionality, whereas more serious changes should be detected otherwise.

### *Method of operation and structure*

Given a specified IC design and its corresponding function, the combinatorial part of this IC is transformed by PCP techniques into a family of circuits with a certain completeness and soundness property. In the notion of PCPs, proofs can be efficiently encoded and provide enough redundancy such that a proof of a false statement will result in many errors. Additionally, a verifier can decide whether a proof is valid or not much more efficiently. The constructed circuits are restructured by adjusting the circuits' depth and inputs. Next, the restructured circuits are combined in a fault-tolerant way by using so-called $\varepsilon$-halvers from the field of sorting networks. Eventually, the original combinatorial part of the IC is replaced by the newly developed one.

### *Model*

In the model underlying the method of the invention, an adversary is allowed to choose at most a small constant fraction $\alpha < 1$ of the gates at each level of a circuit $C$ to be faulty. Additionally, the adversary is allowed to choose at most a faction $\beta < 1$ of the wires between any two consecutive levels of $C$ to be faulty.

One aspect of the invention is related to a computer-implemented method for constructing a fault-tolerant integrated circuit, IC, comprising a plurality of gates and a plurality of wires. The method comprises the steps of: (1a) providing a Boolean function $f$ to be realised as a fault-tolerant Boolean circuit within the IC; (1b) providing a looseness $\delta > 0$; (1c) providing a gate fault-tolerance $\alpha$ with $0 < \alpha < 1$ according to the maximum fraction of the gates being allowed to be faulty at each level of the fault-tolerant Boolean circuit; (1d) providing a wire fault-

tolerance $\beta$ with $0 < \beta < 1$ according to the maximum fraction of the wires being allowed to be faulty between any two consecutive levels of the fault-tolerant Boolean circuit; (1e) deciding whether the Boolean function $f$ is a symmetric function. The method further comprises the steps of: if the Boolean function $f$ is a symmetric function: (1f) constructing a fault-tolerant Boolean circuit realisation of the Boolean function $f$ by using $\delta$-loose realisations of threshold functions; otherwise: (1 g) implementing a family of Boolean circuits; (1h) implementing a combination of the outputs of the family of circuits by AND gates, the AND gates being realised by using $\delta$-loose realisations of threshold functions. The method is characterised in that each of the $\delta$-loose realisations of a threshold function $\mathrm{Th}_\kappa^\nu$, with both $\nu$ and $\kappa$ being integers, comprises: a comparator network $K_1$ having $\nu$ inputs and $\mu = \nu / 2^\tau$ outputs, wherein the integer $\tau$ is related to the binary length of an integer $\lambda$, both integers $\lambda$ and $\tau$ chosen such that the conditions $\lambda\nu/2^\tau \geq \nu-\kappa$ and $(\lambda+1)\nu/2^\tau \leq \nu-\kappa+\delta\nu$ hold simultaneously; an implementation of the overwhelming majority function $\mathrm{Maj}_\sigma^\mu$ taking as input the output of the comparator network $K_1$, wherein the majority function is realised using implementations of $\varepsilon$-halvers, and wherein $\sigma = (1-2^\tau(\varepsilon+\alpha+2\beta+2c\gamma))\mu$ with $c$ denoting the depth of the $\varepsilon$-halvers, and parameters $\varepsilon$, $\alpha$, $\beta$, and $\gamma = \alpha + \beta$ being determined by $1-2^\tau(\varepsilon+\alpha+2\beta+2c\gamma) \geq 3/4+c\gamma$.

Preferably, the comparator network $K_1$ comprises $\tau$ $\varepsilon$-halvers, each of the $\varepsilon$-halvers having depth $c$, the $\varepsilon$-halvers at the $i$-th level having $\nu/2^{i-1}$ inputs and $\nu/2^i$ outputs, and wherein the $\varepsilon$-halvers of two subsequent levels are connected such that with $\lambda_1$, denoting the binary representation of the integer $\lambda$:

> if $\lambda_i = 0$, the input to the ($i+1$)-st $\varepsilon$-halver is the lower part of the i-th $\varepsilon$-halver;
> if $\lambda_i = 1$, the input to the ($i+1$)-st $\varepsilon$-halver is the upper part of the i-th $\varepsilon$-halver.

In one embodiment of the method according to the invention, step (1f) of constructing a fault-tolerant Boolean circuit realisation of the Boolean function $f$ by using $\delta$-loose realisations of threshold functions comprises the steps of: (3a) describing $f$ by a string of length $n+1$, wherein $n$ is the length of the input of $f$, and the $i$-th element of the string is 1 if and only if the value of $f$ is 1 on inputs containing exactly $i$ 1's; if every set of consecutive 0's in the string has length smaller than $\delta n$: (3b) constructing the Boolean circuit such that it is configured to output a 1 for every input; if in the string are $h$ sets of consecutive 0's having a length equal to or greater than $\delta n$, wherein $h$ is at least 1: (3c) implementing, for each set $i \in \{1, ..., h\}$ of the $h$ sets of consecutive 0's, a $\delta$-loose realisation of a negated first threshold function $\neg\mathrm{Th}_{l_i}^n$ and a $\delta$-loose realisation of a second threshold function

$\mathrm{Th}_{u_i}^n$, wherein $l_i$ denotes the lowest position of an element of the $i$-th set, and $u_i$ denotes the highest position of an of the $i$-th set; (3d) connecting, for each $i \in \{1, ..., h\}$, the output of the implementation of the negated first threshold function $\neg\mathrm{Th}_{l_i}^n$ and the output of the implementation of the second threshold function $\mathrm{Th}_{u_i}^n$ via an AND gate; and (3e) connecting the outputs of the AND gates of step (3d) via OR gates.

In a preferred embodiment of the method, the family of circuits $\{C_i\}_{i \in I}$ with $I$ being an index set constructed in step (1g) fulfils the following conditions: (4a) the circuits of the family of circuits $\{C_i\}_{i \in I}$ are of constant size; (4b) each circuit $C_i$ of the family takes as input an error correcting encoding $G(x)$ and an advise string $Y$, wherein $x$ is an input of the Boolean function $f$. Each circuit $C_i$ of the family is configured such that: (4c) for every $x$, for which the Boolean function $f$ evaluates to 1, there is an advise string $Y$ such that for all $i \in I$: $C_i(G(x),Y)=1$, (4d) for every $x$, for which the Boolean function $f$ evaluates to 0, and for every advise string $Y$ it holds $\mathrm{Prob}_{i \in I}[C_i(G(x),Y) = 0] \geq \tilde{\varepsilon}$, for some $\tilde{\varepsilon}$.

In one embodiment of the method according to invention, step (1g) of constructing a family of circuits $\{C_i\}_{i \in I}$ comprises the further step of: (5a) modifying the circuit family $\{C_i\}_{i \in I}$ such that in condition (4c), the advise string $Y$ is unique for every $x$, and condition (4d) holds for every advise string $Y$; (5b) modifying the circuit family $\{C_i\}_{i \in I}$ further such that it contains all members of the circuit family according to step (5a) being configured such that: for every $x$, for which the Boolean function $f$ evaluates to 1, there is a unique advise string $Y_x$ such that for all $i \in I$: $C_i(G(x),Y_x) = 1$ and for every $\tilde{\delta} > 0$ there exists $\tilde{\varepsilon} > 0$ such that $\mathrm{Prob}_{i \in I}[C_i(H,Y) = 0] \leq \tilde{\varepsilon}$ implies that for some $x$, for which the Boolean function $f$ evaluates to 1, it holds $d((H,Y),(G(x),Y_x)) \leq \tilde{\delta}|(H,Y)|$; (5c) implementing the circuit family $\{C_i\}_{i \in I}$ as obtained in step (5b) into the IC.

Preferably, the circuit family $\{C_i\}_{i \in I}$ is further modified in that the family is transformed into a family of synchronous circuits such that all of the members of the family of synchronous circuits have disjoint inputs and all outputs are at the same level.

According to a preferred embodiment, the method further comprises a step of implementing an error correcting encoding means into the IC, wherein the error correcting encoding means is configured to perform a transformation of an input $x$ according to an error correcting code $E$ defined such that: (7a) every input $x$, for which the Boolean function $f$ evaluates to 1, is transformed to $E(x) := (G'(x), Y'_x)$; and (7b) every input $x$, for which the Boolean function $f$ evaluates to 0, is transformed to $E(x) := (G'(x), 0, ..., 0)$, wherein: $G'(x)$ is formed by repeating the bits of the output of the error correcting encoding $G(x)$ as many times as the number of times for which they appear as input to some $\{C_i\}_{i \in I}$ as given by step (5b), and $Y'_x$ is formed by repeating the bits of the unique advise string $Y_x$ as many times as the number of times for which they appear as input to some $\{C_i\}_{i \in I}$ as given by step (5b).

In one embodiment, the method further comprises a step of implementing a family of bounded degree expanders $\{C_j\}_{j \in J}$ into the IC with $J$ being an index set, one bounded degree expander for each group of bits that have to be identical.

According to one embodiment of the method, step (1h) of implementing a combination of the outputs of the family of circuits by AND gates further comprises the steps of: (9a) implementing a combination of the outputs of the family of bounded degree expanders by AND gates, the AND gates being realised by using $\delta$-loose realisations of threshold functions; (9b) combining the output of the combination of the outputs of the family of circuits by AND gates according to step (1h) and output of the combination of the outputs of the family of bounded degree expanders by AND gates according to step (9a) by a further AND gate being realised by using $\delta$-loose realisations of threshold functions.

Preferably, in the method according to the invention, the overwhelming majority function $\mathrm{Maj}_{\sigma}^{\mu}$ is constructed by a series connection of number of majority preservers, wherein preferably as many majority preservers are connected in series that the number of outputs of the last majority preserver is smaller than the minimum of the reciprocal value of $\alpha$ and the reciprocal value of $\beta$ and the output of the last majority preserver is fed into a circuit having fewer than $1/\alpha$ gates at each of its levels and fewer than $1/\beta$ wires between any two subsequent levels and being configured to compute the majority of its inputs.

In one embodiment of the method according to the invention, each of the majority preservers comprises a first $\varepsilon$-halver having $m$ inputs and m outputs, a second $\varepsilon$-halver having $m/2$ inputs and $m/2$ outputs, and a third $\varepsilon$-halver having $m/2$ inputs and $m/2$ outputs, wherein: the upper part of the output of the first $\varepsilon$-halver is fed to the input of the second $\varepsilon$-halver, and the lower part of the output of the first $\varepsilon$-halver is fed to the input of the third $\varepsilon$-halver. Preferably, the first $\varepsilon$-halver, the second $\varepsilon$-halver, and the third $\varepsilon$-halver have the same parameter $\varepsilon$ and the same depth $c$.

A further aspect of the invention relates to a fault-tolerant integrated circuit configured for calculating a Boolean function $f$, comprising $\delta$-loose realisations of threshold functions, wherein each of the $\delta$-loose realisations of a threshold function $\mathrm{Th}_{\kappa}^{v}$, with both $v$ and $\kappa$ being integers, comprises: a comparator network $K_1$ having $v$ inputs and $\mu = v/2^{\tau}$ outputs, wherein the integer $\tau$ is related to the binary length of an integer $\lambda$, both integers $\lambda$ and r chosen such that the conditions $\lambda v/2^{\tau} \geq v - \kappa$ and $(\lambda+1)v/2^{\tau} \leq v - \kappa + \delta v$ hold simultaneously; an implementation of the overwhelming majority function $\mathrm{Maj}_{\sigma}^{\mu}$ taking as input the output of the comparator network $K_1$, wherein the majority function is realised using implementations of $\varepsilon$-halvers, and wherein $\sigma = (1-2^{\tau}(\varepsilon+\alpha+2\beta+2c\gamma))\mu$ with $c$ denoting the depth of the $\varepsilon$-halvers, and parameters $\varepsilon$, $\alpha$, $\beta$, and $\gamma = \alpha + \beta$ being determined by $1-2^{\tau}(\varepsilon+\alpha+2\beta+2c\gamma) \geq 3/4+c\gamma$, wherein $\delta > 0$ is a predefined looseness; $\alpha$ is a predefined gate fault-tolerance with $0 < \alpha < 1$ according to the maximum fraction of the gates being allowed to be faulty at each level of the fault-tolerant Boolean circuit; and $\beta$ is a predefined wire fault-tolerance with $0 < \beta < 1$ according to the maximum fraction of the wires being allowed to be faulty between any two consecutive levels of the fault-tolerant Boolean circuit.

In a preferred embodiment of the fault-tolerant integrated circuit according to the invention, the fault-tolerant integrated circuit is assembled according to any one of the embodiments of the method according to the invention for constructing a fault-tolerant integrated circuit.

One aspect of the invention relates to a system for constructing a fault-tolerant integrated circuit according to any one of the embodiments of the method according to the invention for constructing a fault-tolerant integrated circuit. Preferably, the system comprises a computer.

Other aspects, features, and advantages will be apparent from the summary above, as well as from the description that follows, including the figures and the claims.

## List of Figures

Fig. 1:      2-to-1 multiplexer as a simple Trojan.

Fig. 2:      An infected IC, realized via FIB (Focused Ion Beam).

Fig. 3:      Sketch of an IC with combinational logic C and one output.

Fig. 4:      Triplet of $\varepsilon$-halvers that form a majority preserver.

Fig. 5:      Composition of several majority preservers in order to build a circuit that computes the majority function.

Fig. 6:      Sketch of circuit $C_1$ from the construction of the threshold function.

Fig. 7:      Construction of the threshold function.

Fig. 8:      Truth table of a half adder.

Fig. 9:      Simple design of a half adder, which computes (a) the sum $s$ and (b) the carry $c$.

Fig. 10:     Resilient design of a half adder, which computes (a) the sum $s$ and (b) the carry $c$.

Fig. 11:     Flow chart of the general fault-tolerant IC design scheme.

Fig. 12:     Flow chart of fault-tolerant circuit construction for a symmetric function.

Fig. 13:     Flow chart of fault-tolerant circuit construction for an arbitrary Boolean function.

## Detailed Description

### Construction of a fault tolerant circuit that computes the overwhelming majority function. $\mathrm{Maj}_k^m$

The construction is based on so-called *majority preservers.* In Ref. [5], such a component is defined as a comparator network with $m$ inputs and $m/2$ outputs that guarantees that if at least a given constant fraction greater than 1/2 of the $m$ inputs have the same value, then this value appears in at least the same given constant fraction of the $m/2$ outputs. A majority preserver that tolerates a small constant fraction of errors at each of its levels can be constructed by triplets of $\varepsilon$-halvers.

An $m$-input $\varepsilon$-halver, denoted by *M-halver*, is applied to the $m$ inputs. Next, one $m/2$ -input $\varepsilon$-halver is applied to the upper part and another one is applied to the lower part of the output of the *M*-halver. They are called *U-halver* and *L-halver*. The output of this majority preserver consists of the upper part of the output of the *L*-halver and of the lower part of the output of the *U*-halver. A family of $\varepsilon$-halvers of depth $c$ with the same parameters $\varepsilon$ and $c$ for all input lengths exists for an appropriate choice of the constants $\varepsilon$ and $c$.

By feeding the outputs of one majority preserver as inputs to the next, we combine $j$ majority preservers. This construction with $m/2^j$ outputs has the property that its overwhelming majority is the same as the overwhelming majority of the input.

Once $m/2^j < \min\{1/\alpha, 1/\beta\}$, the computation can be finished by a small circuit that has fewer than $1/\alpha$ gates at each of its levels, fewer than $1/\beta$ wires between all levels and that computes the usual majority of its inputs. In this small circuit the adversary can destroy neither gates nor wires-according to the model underlying the method of the invention.

Fig. 4 displays the layout of a majority preserver, and Fig. 5 illustrates the circuit that computes the majority function.

### Construction of a fault-tolerant circuit that computes the threshold function $Th_k^n$ in a $\delta$-loose manner

Let $\delta > 0$. Parameters $t$ and $l$ are chosen such that $ln/2^t \geq n - k$ and $(l+1)n/2^t \leq n - k + \delta n$. $t$ depends on $n$ and $\delta$, but not on $k$. The construction consists of two components. First, a circuit, denoted by $C_1$, is constructed, which has $n$ inputs and $n/2^t$ outputs. The second component is the construction, which computes the overwhelming majority function $\mathrm{Maj}_s^m$ of the outputs of $C_1$,

where $m = n/2^t$ and

$$s = (1 - 2^t(\varepsilon + \alpha + 2\beta + 2c\gamma))m:$$

Parameters $\varepsilon$, $\alpha$, $\beta$, and $\gamma = \alpha + \beta$ are determined by the following inequality:

$$1 - 2^t(\varepsilon + \alpha + 2\beta + 2c\gamma) \geq 3/4 + c\gamma.$$

Depending on the kind of $\varepsilon$-halvers that are used and depending on $\varepsilon$, $c$ can be computed.

Circuit $C_1$ is a comparator network consisting of $t$ $\varepsilon$-halvers each of depth $c$. Here, the $i$-th $\varepsilon$-halver has $n/2^{i-1}$ inputs and $n/2^i$ outputs. Denote by $l_1, ..., l_t$ the binary representation of $l$.

- If $l_i = 0$, the input to the $(i + 1)$-st $\varepsilon$-halver is the lower part of the output of the $i$-th $\varepsilon$-halver.

- If $l_i = 1$, the upper part is fed to the next $\varepsilon$-halver.

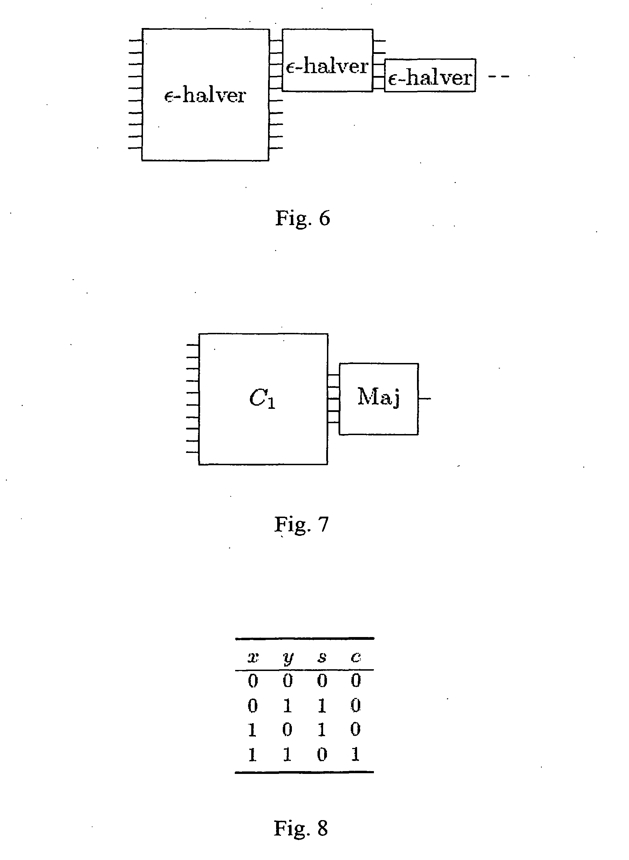

In Fig. 6, the circuit $C_1$ from the construction, and in Fig. 7, the circuit that computes the threshold function is shown.

### Construction of a fault-tolerant circuit that computes a symmetric function f in a $\delta$-loose manner

Let $\delta > 0$. Every symmetric function $f$ can be described by a binary string of length $n + 1$. The $i$-th element of the string is 1, if and only if the value of $f$ is 1 on inputs containing exactly $i$ 1's. Suppose every set of consecutive 0's in this string has length $< \delta n$. In this case, the $\delta$-loose computation of $f$ becomes trivial since the value 1 can be output for every input. Now consider the case that the string contains $h \geq 1$ sets of consecutive 0's of length $\geq \delta n$. Denote by $(l_i, u_i)$ the $i$-th set. In order to compute $f$ in a $\delta$-loose way, it is sufficient to compute each $\neg\mathrm{Th}_{l_i}^n$ and each $\mathrm{Th}_{u_i}^n$. These $2h$ functions can be computed in parallel. They can all be computed in a $\delta$-loose way by the above constructions because the negated threshold functions may be computed analogously to presented techniques. Set $\alpha := \tilde{\alpha}/2h$, $\beta := \tilde{\beta}/2h$, and $\gamma := \tilde{\gamma}/2h$, and choose $\tilde{\alpha}$, $\tilde{\beta}$, and $\tilde{\gamma}$ according to constructions for the threshold function. The parameters $\tilde{\alpha}$, $\tilde{\beta}$, $\tilde{\gamma}$, $\delta$, $\varepsilon$, and $c$ can be chosen in such a way that they have the same value for all $2h$ circuits, cf. Ref. [7].

### Construction of a fault-tolerant circuit that computes an arbitrary Boolean function f with encoded input in a 6-loose manner

Let $C$ be a Boolean circuit and let $f : \{0,1\}^n \rightarrow \{0,1\}$ be the corresponding Boolean function computed by $C$. Consider the subset $C^1$ of tuples from $\{0,1\}^n$, for which $C$ evaluates to 1 and the analogously defined subset $C^0$. Arora et al. presented a procedure to transform a circuit $C$ into a family $\{C_i\}_{i \in I}$ of constant size circuits with input $(G(x), Y)$ [3]. Here, $G(x)$ is an adequate error correcting encoding of the input $x$ to $C$, and $Y$ is an advise string (both have length polynomial in $S(C)$). For this family $\{C_i\}_i$ we have:

1. For every $x \in C^1$ there is a $Y$ such that for all $i \in I$ : $C_i(G(x), Y) = 1$.

2. For every $x \in C^0$ and for every $Y$ it is true that $\mathrm{Prob}_{i \in I}[C_i(G(x), Y) = 0] \geq \varepsilon$, for some e.

Now, by applying techniques due to Valiant and Vazirani [12], we can modify the circuit family $C_i$ such that $Y$ of property 1 is unique for every $x$ and property 2 holds for every $Y$. Thus, properties 1 and 2 can be combined into a single property, where $|\cdot|$ denotes the binary length of the argument and $d(\cdot, \cdot)$ the Hamming distance between its arguments.

The circuit $C'$ will consist of several parts. Circuit $C'$ should contain all members of the modified family $\{C_i\}_{i \in I}$ with the property that:

- For every $x \in C^1$ there is a unique $Y_x$ such that for all $i \in I$ : $C_i(G(x), Y_x) = 1$. Also, for every $\delta > 0$ there exists $\varepsilon > 0$ such that $\mathrm{Prob}_{i \in I}[C_i(H, Y) = 0] \leq \varepsilon$ implies that $d((H, Y), (G(x), Y_x)) \leq \delta|(H, Y)|$ for some $x \in C^1$.

The members of the family should have disjoint inputs, which can be achieved by transforming $G(x)$ into $G'(x)$ and $Y_x$ into $Y'_x$. $G'(x)$ is formed by repeating the bits of $G(x)$ and $Y'_x$ is formed by repeating $Y_x$ as many times as the number of times, for which they appear as input to some $\{C_i\}$, $i \in I$. By this construction each bit of $G(x)$ (respectively $Y_x$) will be repeated for the same number of times [7]. Next, the error correcting code $E$ is defined. If $x \in C^1$, $E(x) := (G'(x), Y'_x)$, and if $x \in C^0$, $E(x) := (G'(x), 0, ..., 0)$. Finally, $C'$ is constructed in the following way. The family $\{C_i\}_{i \in I}$ is transformed into a family of synchronous circuits such that all of its members have disjoint inputs and all outputs are at the same level. In order to ensure that the groups of repeated bits consist of identical bits, extra tests are added. Therefore, a bounded degree expander is introduced over each group of input bits that have to be identical, cf. Refs. [2, 8]. For every edge of these expanders, equality is checked. This family is referred to as $\{D_j\}_{j \in J}$ and the circuits have to be synchronized with the members of $\{C_i\}_{i \in I}$ so that all outputs are at the same level. Furthermore, the sizes of $I$ and $J$ have to be the same within a constant factor. $\wedge_{i \in I} C_i(H, Y) \wedge \wedge_{j \in J} D_j(H, Y) = f \circ E(H, Y)$. Since the construction for threshold functions can be used to compute the Boolean *AND* function, this technique is applied to combine the output bits of the circuits $C_i, i \in I$, and $D_j, j \in J$.

### Concrete example of application

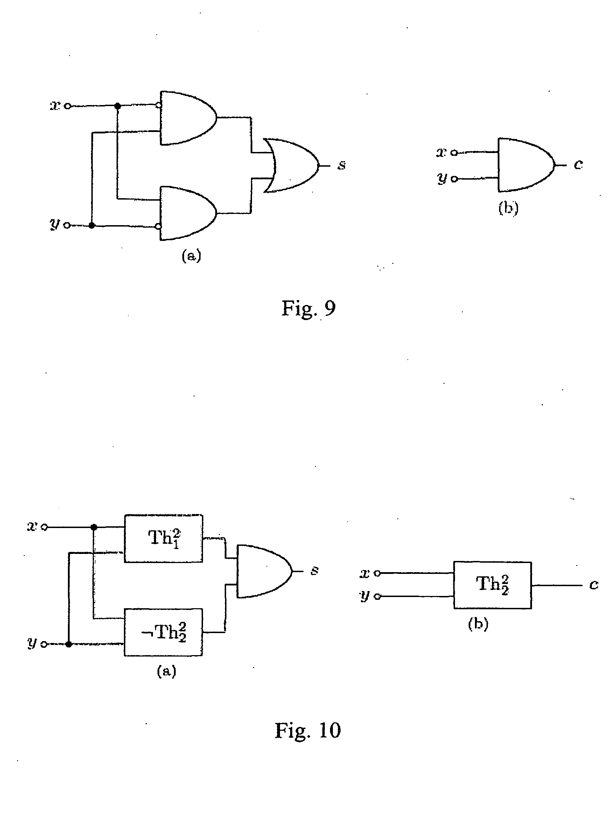

In this section, parts of the construction are illustrated by the simple example of a half adder. A half adder adds two bits *x* and *y*, and it has two outputs, *s* ("sum") and *c* ("carry"). In Fig. 8, the truth table of a half adder is displayed. A simple construction, which contains only elementary gates, is presented in Fig. 9.

The two outputs *s* and *c* can be computed by circuits consisting of resilient components. These components implement resilient circuits of threshold functions described above (cf. Section "Construction of a fault-tolerant circuit that computes the threshold function $\mathrm{Th}_k^n$ in a δ-loose manner") and analogously constructed resilient circuits of negated threshold functions. Output *c* can be computed by the function $\mathrm{Th}_2^2$, and output *s* can be computed by functions $\neg\mathrm{Th}_2^2$ and $\mathrm{Th}_1^2$. Fig. 10 shows the new, resilient circuits. The precise constructions of the circuits, which compute the threshold functions, depend on the kind of ε-halvers that are used and on the parameter δ for the δ-loose computation of the threshold functions.

### Flow charts of the method

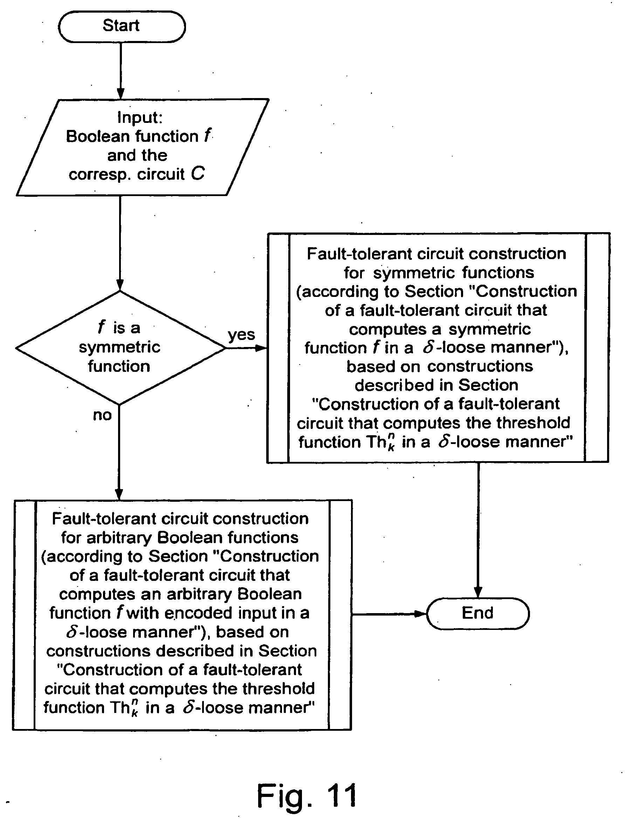

Only to illustrate the method according to the invention, Figs. 11 to 13 depict some of the steps of the method with the help of flow charts.

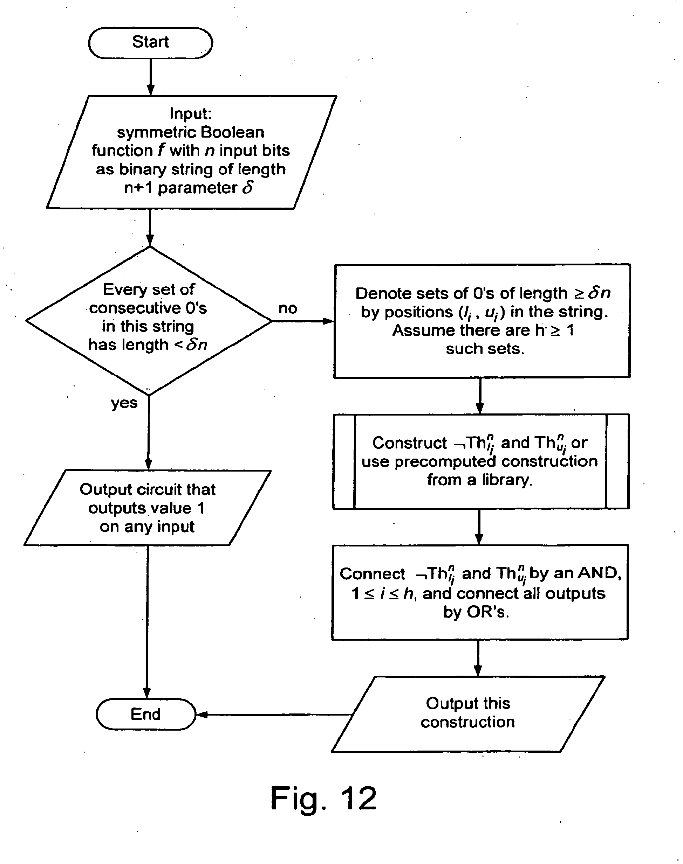

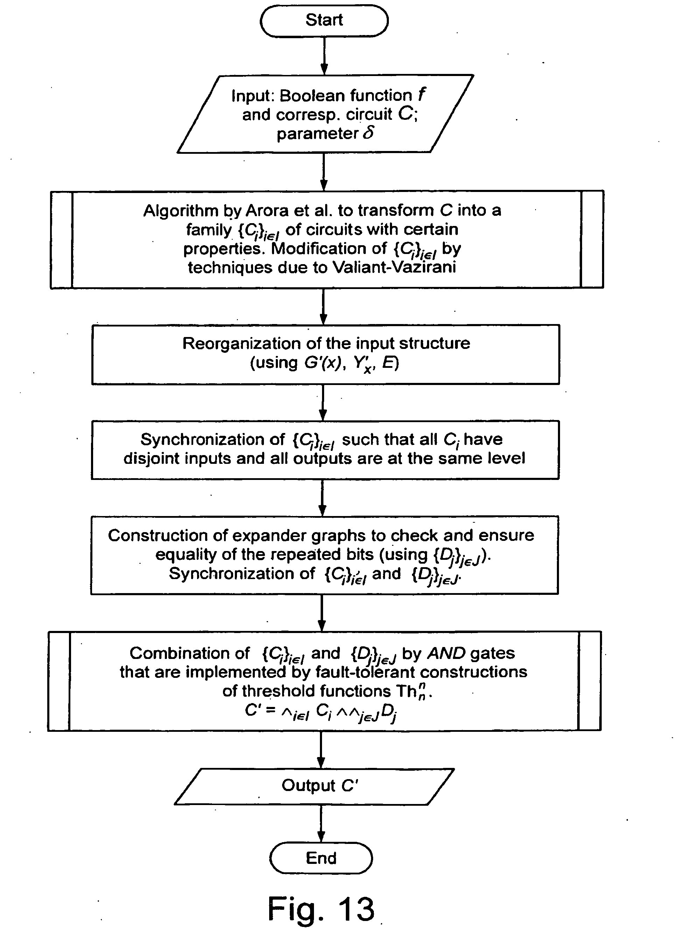

Fig. 11 shows that according to the method of the invention, after being given a Boolean function *f* or a circuit *C*, it has to be decided whether or not *f* is a symmetric function. In either case, a corresponding fault-tolerant circuit is constructed. However, if *f* is symmetric, the steps according to the disclosure of Sec. "Construction of a fault-tolerant circuit that computes a symmetric function *f* in a δ-loose manner" (see above) have to be applied. Further details for this case are shown in Fig. 12. On the other hand, if *f* is a non-symmetric function, then the steps described in Sec. "Construction of a fault-tolerant circuit that computes an arbitrary Boolean function *f* with encoded input in a δ-loose manner" (see above) have to be used. Further details for the non-symmetric case are shown in Fig. 13. It should be noted that both cases are based on constructions described in Sec. "Construction of a fault-tolerant circuit that computes the threshold function $\mathrm{Th}_k^n$ in a δ-loose manner" (see above).

Fig. 12 is a flow chart showing in further detail some of the steps to be performed in case of a symmetric function *f* An explanation of the steps can be taken directly from the description given above in Sec. "Construction of a fault-tolerant circuit that computes a symmetric function *f* in a δ-loose manner".

Steps to be performed in case of a non-symmetric function *f* are shown in Fig. 13. An explanation of the shown steps can be taken directly from the description given above in Sec. "Construction of a fault-tolerant circuit that computes an arbitrary Boolean function *f* with encoded input in a δ-loose manner".

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### References

All related scientific publications, on which this work is based, are cited and listed in the bibliography. To the best of our knowledge, there is no prior work relating the area of fault-tolerant circuit computation with hardware Trojans.

[1] M. Ajtai, J. Komlós, and E. Szemerédi. An O(n log n) sorting network. In Proceedings of the fifteenth annual ACM Symposium on Theory of Computing, volume 129, pages 1 - 9. ACM, 1983.

[2] S. Arora and B. Barak. Computational Complexity: A Modem Approach, volume 6. Cambridge University Press, 2009.

[3] S. Arora, C. Lund, R. Motwani, and M. Sudan. Proof verification and hardness of approximation problems. In Proceedings., 33rd Annual Symposium on Foundations of Computer Science, pages 14 - 23. Ieee, 1992.

[4] S. Arora and S. Safra. Probabilistic Checking of Proofs. In Proceedings of the 33rd IEEE Symposium on Foundations of Computer Science, pages 2 - 13, 1992.

[5] S. Assaf and E. Upfal. Fault tolerant sorting network. In Proceedings of 31st IEEE Symposium on Foundations of Computer Science, pages 275 - 284. IEEE Comput. Soc. Press, 1990.

[6] R. Dobrushin and S. Ortyukov. Upper bound on the redundancy of self-correcting arrangements of unreliable functional elements. Problems of Information Transmission, 13(3):203 - 218, 1977.

[7] A. Gál and M. Szegedy. Fault tolerant circuits and probabilistically checkable proofs. Proceedings of Structure in Complexity Theory. 10th Annual IEEE Conference, pages 65 - 73, 1995.

[8] S. Hoory, N. Linial, and A. Wigderson. Expander graphs and their applications. Bulletin of the American Mathematical Society, 43(04):439 - 562, Aug. 2006.

[9] R. Karri, J. Rajendran, K. Rosenfeld, and M. Tehranipoor. Trustworthy Hardware: Identifying and Classifying Hardware Trojans. IEEE Computer Magazine, 43(10):39 - 46, 2010.

[10] F. J. MacWilliams and N. J. A. Sloane. The Theory of Error-Correcting Codes, volume 16. North-Holland, 1977.

[11] N. Pippenger. On networks of noisy gates. In Proceedings of 26th IEEE Symposium on the Foundations of Computer Science, pages 30 - 36, 1985.

[12] L. Valiant and V. Vazirani. NP is as easy as detecting unique solutions. Theoretical Computer Science, 47(3):85 - 93, 1986.

[13] J. von Neumann. Probabilistic logics and the synthesis of reliable organisms from unreliable components. In C. E. Shannon and J. McCarthy, editors, Automata Studies, volume 34, pages 329 - 378. Princeton Univ., Princeton University Press, 1956.

**Claims**

1. Computer-implemented method for constructing a fault-tolerant integrated circuit, IC, comprising a plurality of gates and a plurality of wires, the method comprising the steps of:

   (1a) providing a Boolean function $f$ to be realised as a fault-tolerant Boolean circuit within the IC;
   (1b) providing a looseness $\delta > 0$;
   (1c) providing a gate fault-tolerance $\alpha$ with $0 < \alpha < 1$ according to the maximum fraction of the gates being allowed to be faulty at each level of the fault-tolerant Boolean circuit;
   (1d) providing a wire fault-tolerance $\beta$ with $0 < \beta < 1$ according to the maximum fraction of the wires being allowed to be faulty between any two consecutive levels of the fault-tolerant Boolean circuit;
   (1e) deciding whether the Boolean function $f$ is a symmetric function;
   if the Boolean function $f$ is a symmetric function:
   (1f) constructing a fault-tolerant Boolean circuit realisation of the Boolean function $f$ by using $\delta$-loose realisations of threshold functions;
   otherwise:
   (1g) implementing a family of Boolean circuits;
   (1h) implementing a combination of the outputs of the family of circuits by AND gates, the AND gates being realised by using $\delta$-loose realisations of threshold functions,
   the method **characterised in that** each of the $\delta$-loose realisations of a threshold function $\mathrm{Th}_\kappa^\nu$, with both $v$ and $\kappa$ being integers, comprises:

   a comparator network $K_1'$ having $v$ inputs and $\mu = v/2^\tau$ outputs, wherein the integer $\tau$ is related to the binary length of an integer $\lambda$, both integers $\lambda$ and $\tau$ chosen such that the conditions $\lambda v/2^\tau \geq v - \kappa$ and $(\lambda+1)v/2^\tau \leq v - \kappa + \delta v$ hold simultaneously;
   an implementation of the overwhelming majority function $\mathrm{Maj}_\sigma^\mu$ taking as input the output of the comparator network $K_1$, wherein the majority function is realised using implementations of $\epsilon$-halvers, and wherein $\sigma = (1-2^\tau(\epsilon+\alpha+2\beta+2c\gamma))\mu$ with $c$ denoting the depth of the $\epsilon$-halvers, and parameters $\epsilon$, $\alpha$, $\beta$, and $\gamma = \alpha + \beta$ being determined by $1-2^\tau(\epsilon+\alpha+2\beta+2c\gamma) \geq 3/4+c\gamma$;

   wherein step (1f) of constructing a fault-tolerant Boolean circuit realisation of the Boolean function $f$ by using $\delta$-loose realisations of threshold functions comprises the steps of:

   (1fa) describing $f$ by a string of length $n+1$, wherein $n$ is the length of the input of $f$, and the $i$-th element of the string is 1 if and only if the value of $f$ is 1 on inputs containing exactly $i$ 1's;
   if every set of consecutive 0's in the string has length smaller than $\delta n$ :
   (1fb) constructing the Boolean circuit such that it is configured to output a 1 for every input;
   if in the string are $h$ sets of consecutive 0's having a length equal to or greater than $\delta n$, wherein $h$ is at least 1:
   (1fc) implementing, for each set $i \in \{1, ..., h\}$ of the $h$ sets of consecutive 0's, a $\delta$-loose

realisation of a negated first threshold function $\neg \mathbf{Th}_{l_i}^n$ and a $\delta$-loose realisation of a second threshold function $\mathbf{Th}_{u_i}^n$, wherein $l_i$ denotes the lowest position of an element of the $i$-th set, and $u_i$ denotes the highest position of an of the $i$-th set;

(1fd) connecting, for each $i \in \{1,...,h\}$, the output of the implementation of the negated first threshold function $\neg \mathbf{Th}_{l_i}^n$ and the output of the implementation of the second threshold function $\mathbf{Th}_{u_i}^n$ via an AND gate;

(1fe) connecting the outputs of the AND gates of step (3d) via OR gates;

wherein the family of circuits $\{C_i\}_{i \in I}$ with $I$ being an index set constructed in step (1g) fulfils the following conditions:

> (a) the circuits of the family of circuits $\{C_i\}_{i \in I}$ are of constant size;
> (b) each circuit $C_i$ of the family takes as input an error correcting encoding $G(x)$ and an advise string $Y$, wherein $x$ is an input of the Boolean function $f$;
> each circuit $C_i$ of the family is configured such that:
> (c) for every $x$, for which the Boolean function $f$ evaluates to 1, there is an advise string $Y$ such that for all $i \in I$: $C_i(G(x), Y) = 1$,
> (d) for every $x$, for which the Boolean function $f$ evaluates to 0, and for every advise string $Y$ it holds $\mathrm{Prob}_{i \in I}[G(x), Y) = 0] \geq \tilde{\varepsilon}$, for some $\tilde{\varepsilon}$; and

wherein step (1g) of constructing a family of circuits $\{C_i\}_{i \in I}$ comprises the further step of:

> (1ga) modifying the circuit family $\{C_i\}_{i \in I}$ such that in condition (c), the advise string $Y$ is unique for every $x$, and condition (d) holds for every advise string $Y$;
> (1gb) modifying the circuit family $\{C_i\}_{i \in I}$ further such that it contains all members of the circuit family according to step (1ga) being configured such that:

> for every $x$, for which the Boolean function $f$ evaluates to 1, there is a unique advise string $Y_x$ such that for all $i \in I$: $C_i(G(x), Y_x) = 1$ and for every $\tilde{\delta} > 0$ there exists $\tilde{\varepsilon} > 0$ such that $\mathrm{Prob}_{i \in I}[C_i(H, Y) = 0] \leq \tilde{\varepsilon}$ implies that for some $x$, for which the Boolean function $f$ evaluates to 1, it holds $d((H, Y), (G(x), Y_x)) \leq \tilde{\delta}|(H, Y)|$;

(1gc) implementing the circuit family $\{C_i\}_{i \in I}$ as obtained in step (1gb) into the IC.

2. The method of claim 1, wherein the comparator network $K_1$ comprises $\tau \varepsilon$-halvers, each of the $\varepsilon$-halvers having depth $c$, the $\varepsilon$-halvers at the $i$-th level having $v/2^{i-1}$ inputs and $v/2^i$ outputs, and wherein the $\varepsilon$-halvers of two subsequent levels are connected such that with $\lambda_1, ..., \lambda_\tau$ denoting the binary representation of the integer $\lambda$:

> if $\lambda_i = 0$, the input to the $(i+1)$-st $\varepsilon$-halver is the lower part of the i-th $\varepsilon$-halver;
> if $\lambda_i = 1$, the input to the $(i+1)$-st $\varepsilon$-halver is the upper part of the i-th $\varepsilon$-halver.

3. The method of claim 1 or 2, wherein the circuit family $\{C_i\}_{i \in I}$ is further modified in that the family is transformed into a family of synchronous circuits such that all of the members of the family of synchronous circuits have disjoint inputs and all outputs are at the same level.

4. The method of claim 1, 2 or 3, further comprising a step of implementing an error correcting encoding means into the IC, wherein the error correcting encoding means is configured to perform a transformation of an input $x$ according to an error correcting code E defined such that:

> (4a) every input $x$, for which the Boolean function $f$ evaluates to 1, is transformed to
> $$E(x) := (G'(x), Y'_x), \text{ and}$$
> (4b) every input $x$, for which the Boolean function $f$ evaluates to 0, is transformed to $E(x) := (G'(x), 0, ..., 0)$,
> wherein:

> $G'(x)$ is formed by repeating the bits of the output of the error correcting encoding $G(x)$ as many times as the number of times for which they appear as input to some $\{C_i\}_{i \in I}$ as given by step (1gb), and
> $Y'_x$ is formed by repeating the bits of the unique advise string $Y_x$ as many times as the number of times for which they appear as input to some $\{C_i\}_{i \in I}$ as given by step (1gb).

5. The method of claim 4, further comprising a step of implementing a family of bounded degree expanders $\{C_j\}_{j \in J}$ into the IC with $J$ being an index set, one bounded degree expander for each group of bits that have to be identical.

6. The method of claim 5, wherein step (1h) of implementing a combination of the outputs of the family of circuits by AND gates further comprises the steps of:

(6a) implementing a combination of the outputs of the family of bounded degree expanders by AND gates, the AND gates being realised by using $\delta$ -loose realisations of threshold functions;

(6b) combining the output of the combination of the outputs of the family of circuits by AND gates according to step (1h) and output of the combination of the outputs of the family of bounded degree expanders by AND gates according to step (6a) by a further AND gate being realised by using $\delta$ -loose realisations of threshold functions.

7. The method of any one of claims 1 to 6, wherein the overwhelming majority function $\mathrm{Maj}_{\sigma}^{\mu}$ is constructed by a series connection of number of majority preservers, wherein preferably as many majority preservers are connected in series that the number of outputs of the last majority preserver is smaller than the minimum of the reciprocal value of $\alpha$ and the reciprocal value of $\beta$ and the output of the last majority preserver is fed into a circuit having fewer than $1/\alpha$ gates at each of its levels and fewer than $1/\beta$ wires between any two subsequent levels and being configured to compute the majority of its inputs.

8. The method of claim 7, wherein each of the majority preservers comprises a first $\varepsilon$ halver having $m$ inputs and $m$ outputs, a second $\varepsilon$ -halver having $m/2$ inputs and $m/2$ outputs, and a third $\varepsilon$ -halver having $m/2$ inputs and $m/2$ outputs, wherein:

the upper part of the output of the first $\varepsilon$ -halver is fed to the input of the second $\varepsilon$-halver, and the lower part of the output of the first $\varepsilon$ -halver is fed to the input of the third $\varepsilon$-halver; wherein preferably the first $\varepsilon$ -halver, the second $\varepsilon$ -halver, and the third $\varepsilon$ -halver have the same parameter $\varepsilon$ and the same depth $c$.

9. Fault-tolerant integrated circuit configured for calculating a Boolean function $f$, comprising $\delta$ -loose realisations of threshold functions, wherein each of the $\delta$ -loose realisations of a threshold function $\mathrm{Th}_{\kappa}^{\nu}$, with both $v$ and $\kappa$ being integers, comprises:

a comparator network $K_1$ having $v$ inputs and $\mu = v / 2^{\tau}$ outputs, wherein the integer $\tau$ is related to the binary length of an integer $\lambda$, both integers $\lambda$ and $\tau$ chosen such that the conditions $\lambda v/2^{\tau} \geq$ $v - \kappa$ and $(\lambda + 1)v/2^{\tau} \leq v - \kappa + \delta v$ hold simultaneously;

an implementation of the overwhelming majority function $\mathrm{Maj}_{\sigma}^{\mu}$ taking as input the output of the comparator network $K_1$, wherein the majority function is realised using implementations of $\varepsilon$-halvers, and wherein $\sigma = (1 - 2^{\tau} (\varepsilon + \alpha + 2\beta + 2c\gamma)) \mu$ with $c$ denoting the depth of the $\varepsilon$ -halvers, and parameters $\varepsilon, \alpha, \beta$, and $\gamma = \alpha + \beta$ being determined by $1-2\tau (\varepsilon + \alpha + 2\beta + 2c\gamma) \geq 3/4 + c\gamma$, wherein $\delta > 0$ is a predefined looseness; $\alpha$ is a predefined gate fault-tolerance with $0 < \alpha < 1$ according to the maximum fraction of the gates being allowed to be faulty at each level of the fault-tolerant Boolean circuit; and $\beta$ is a predefined wire fault-tolerance with $0 < \beta < 1$ according to the maximum fraction of the wires being allowed to be faulty between any two consecutive levels of the fault-tolerant Boolean circuit, assembled according to the method of any one of claims 1 to 8.

10. System having means for constructing a fault-tolerant integrated circuit according to the method of any one of claims 1 to 8, wherein the system preferably comprises a computer.

## Patentansprüche

1. Computerimplementiertes Verfahren zum Konstruieren einer fehlertoleranten integrierten Schaltung, IC, mit mehreren Gattern und mehreren Verdrahtungen, wobei das Verfahren die Schritte aufweist:

(1a) Bereitstellen einer Boole'schen Funktion $f$, die als eine fehlertolerante Boole'sche Schaltung in dem IC realisiert werden soll;
(1b) Bereitstellen einer Toleranz (looseness) $\delta$ > 0;
(1c) Bereitstellen einer Gatter-Fehlertoleranz $\alpha$, wobei $0 < \alpha < 1$ ist, gemäß dem maximalen Anteil von Gattern, die auf jeder Ebene der fehlertoleranten Boole'schen Schaltung fehlerhaft sein dürfen;
(1d) Bereitstellen einer Verdrahtungsfehlertoleranz $\beta$, wobei $0 < \beta < 1$ ist, gemäß dem maximalen Anteil von Verdrahtungen, die zwischen zwei aufeinanderfolgenden Ebenen der fehlertoleranten Boole'schen Schaltung fehlerhaft sein dürfen;
(1e) Entscheiden, ob die Boole'sche Funktion $f$ eine symmetrische Funktion ist;
wenn die Boole'sche Funktion $f$ eine symmetrische Funktion ist:
(1f) Konstruieren einer fehlertoleranten Boole'schen Schaltungsrealisierung der Boole'schen Funktion *f* unter Verwendung der δ-toleranten Realisierungen von Schwellenfunktionen;

andernfalls:

(1g) Implementieren einer Familie Boole'scher Schaltungen;

(1h) Implementieren einer Kombination der Ausgaben der Schaltungsfamilie durch UND-Gatter, wobei die UND-Gatter unter Verwendung von δ-toleranten Realisierungen von Schwellenfunktionen realisiert werden,

wobei das Verfahren **dadurch gekennzeichnet ist, dass** jede der δ-toleranten Realisierungen einer Schwellenfunktion $\mathrm{Th}_{\kappa}^{\nu}$, wobei *v* und κ ganze Zahlen sind, aufweist:

ein Vergleichernetzwerk $K_1$ mit v Eingängen und $\mu = v/2^{\tau}$ Ausgängen, wobei die ganze Zahl τ mit der binären Länge einer ganzen Zahl λ in Beziehung steht, wobei beide ganze Zahlen λ und τ derart gewählt sind, dass die Bedingungen $\lambda v/2^{\tau} \geq v - \kappa$ und $(\lambda+1)v/2^{\tau} \leq v - \kappa + \delta v$ gleichzeitig verfüllt sind;

eine Implementierung der überwältigenden Majoritätsfunktion $\mathrm{Maj}_{\sigma}^{\mu}$, die als Eingabe die Ausgabe des Vergleichemetzwerks $K_1$ verwendet, wobei die Majoritätsfunktion unter Verwendung von Implementierungen von ε-Halbierern realisiert wird, und wobei $\sigma = (1-2^{\tau}(\varepsilon+\alpha+2\beta+2c\gamma))\mu$ ist, wobei c die Tiefe der ε-Halbierer darstellt und die Parameter ε, α, β und γ = α + β durch $1-2^{\tau}(\varepsilon+\alpha+2\beta+2c\gamma) \geq 3/4 + c\gamma$ bestimmt sind;

wobei Schritt (1f) zum Konstruieren einer fehlertoleranten Boole'schen Schaltungsrealisierung der Boole'schen Funktion *f* unter Verwendung von δ-toleranten Realisierungen von Schwellenfunktionen die Schritte aufweist:

(1fa) Beschreiben von *f* durch eine Zeichenfolge der Länge *n*+1, wobei *n* die Länge der Eingabe von *f* ist, und wobei das i-te Element der Zeichenfolge 1 beträgt, dann und nur dann, wenn der Wert von *f* bezüglich Eingaben, die exakt i Einsen enthalten, 1 beträgt;

falls jeder Satz aufeinanderfolgender Nullen in der Zeichenfolge eine Länge hat, die kleiner ist als δ*n*:

(1fb) Konstruieren der Boole'schen Schaltung derart, dass sie dafür konfiguriert ist, für jede Eingabe eine 1 auszugeben;

falls in der Zeichenfolge *h* Sätze aufeinanderfolgender Nullen mit einer Länge vorhanden sind, die größer oder gleich δ*n* ist, wobei *h* mindestens 1 beträgt:

(1fc) Implementieren einer δ-toleranten Realisierung einer negierten ersten Schwellenfunktion $\neg\mathrm{Th}_{l_i}^{n}$, und einer δ-toleranten Realisierung einer zweiten Schwellenfunktion $\mathrm{Th}_{u_i}^{n}$, für jeden Satz $i \in \{1, ..., h\}$ der *h* Sätze aufeinanderfolgender Nullen, wobei $l_i$ die niedrigste Position eines Elements des i-ten Satzes und $u_i$ die höchste Position eines Elements des *i*-ten Satzes bezeichnen;

(1fd) Verbinden der Ausgabe der Implementierung der negierten ersten Schwellenfunktion $\neg\mathrm{Th}_{l_i}^{n}$ und der Ausgabe der Implementierung der zweiten Schwellenfunktion $\mathrm{Th}_{u_i}^{n}$ über ein UND-Gatter für jedes $i \in \{1, ..., h\}$;

(1fe) Verbinden der Ausgaben der UND-Gatter von Schritt (3d) über ODER-Gatter, wobei die Schaltungsfamilie $\{C_i\}_{i \in I}$, wobei *I* ein in Schritt (1g) konstruierter Indexsatz ist, die folgenden Bedingungen erfüllt:

(a) die Schaltungen der Schaltungsfamilie $\{C_i\}_{i \in I}$ haben eine konstante Größe;

(b) jede Schaltung $C_i$ der Familie verwendet als Eingabe eine Fehlerkorrekturcodierung *G(x)* und eine hinweisende Zeichenfolge *Y*, wobei *x* eine Eingabe der Boole'schen Funktion *f* ist;

jede Schaltung $C_i$ der Familie ist derart konfiguriert, dass:

(c) für jeden Wert *x*, für den die Boole'sche Funktion *f* 1 ergibt, gibt es eine hinweisende Zeichenfolge *Y*, so dass für alle i∈I: $C_i(G(x), Y) = 1$ ist;

(d) für jeden Wert *x*, für den die Boole'sche Funktion *f* 0 ergibt und für jede hinweisende Zeichenfolge *Y* gilt $\mathrm{Prob}_{i \in I}[C_i(G(x), Y) = 0] \geq \tilde{\varepsilon}$ für ein $\tilde{\varepsilon}$; und wobei Schritt (1g) zum Konstruieren einer Schaltungsfamilie $\{C_i\}_{i \in I}$ den weiteren Schritt aufweist:

(1ga) Modifizieren der Schaltungsfamilie $\{C_i\}_{i \in I}$ derart, dass in der Bedingung (c) die hinweisende Zeichenfolge *Y* für jeden Wert *x* eindeutig ist, und die Bedingung (d) für jede hinweisende Zeichenfolge Y gilt;

(1gb) Modifizieren der Schaltungsfamilie $\{C_i\}_{i \in I}$ ferner derart, dass sie alle Mitglieder der Schaltungsfamilie gemäß Schritt (1ga) enthält, die derart konfiguriert sind, dass:

für jeden Wert *x*, für den die Boole'sche Funktion *f* 1 ergibt, es eine eindeutige hinweisende Zeichenfolge $Y_x$ derart gibt, dass

für alle $i \in I$: $C_i(G(x), Y_x) = 1$ und für jedes $\tilde{\delta}$ > 0 ein $\tilde{\varepsilon}$ > 0 existiert, so dass $\text{Prob}_{i \in I}[C_i(H, Y) = 0] \leq \tilde{\varepsilon}$ impliziert, dass für einige x, für die die Boole'sche Funktion f 1 ergibt, $d((H, Y), (G(x), Y_x)) \leq \tilde{\delta}|(H, Y)|$ gilt;
(1gc) Implementieren der in Schritt (1gb) erhaltenen Schaltungsfamilie $\{C_i\}_{i \in I}$ in den IC.

2. Verfahren nach Anspruch 1, wobei das Vergleichernetzwerk $K_1$ $\tau\varepsilon$-Halbierer aufweist, wobei jeder der $\varepsilon$-Halbierer eine Tiefe c aufweist, wobei die $\varepsilon$-Halbierer an der i-ten Ebene $v/2^{i-1}$ Eingänge und $v/2^i$ Ausgänge aufweisen, und wobei die $\varepsilon$-Halbierer zweier aufeinanderfolgender Ebenen derart miteinander verbunden sind, dass, wenn $\lambda_1, ..., \lambda_r$ die binäre Darstellung der ganzen Zahl $\lambda$ bezeichnet:

wenn $\lambda_i = 0$ ist, das Eingangssignal des (i+1)-ten $\varepsilon$-Halbierers der untere Teil des i-ten $\varepsilon$-Halbierers ist; und
wenn $\lambda_i = 1$ ist, das Eingangssignal des (i+1)-ten $\varepsilon$-Halbierers der obere Teil des i-ten $\varepsilon$-Halbierers ist.

3. Verfahren nach Anspruch 1 oder 2, wobei die Schaltungsfamilie $\{C_i\}_{i \in I}$ ferner dahingehend modifiziert ist, dass die Familie in eine Familie synchroner Schaltungen transformiert ist, so dass alle Mitglieder der Familie synchroner Schaltungen disjunkte Eingaben haben und alle Ausgaben auf der gleichen Ebene erfolgen.

4. Verfahren nach Anspruch 1, 2 oder 3, ferner mit einem Schritt zum Implementieren einer Fehlerkorrekturcodiereinrichtung in den IC, wobei die Fehlerkorrekturcodiereinrichtung dafür konfiguriert ist, eine Transformation einer Eingabe x gemäß einem Fehlerkorrekturcode E auszuführen, der derart definiert ist, dass:

(4a) jede Eingabe x, für die die Boole'sche Funktion f 1 ergibt, in $E(x) := (G'(x), Y'_x)$ transformiert wird; und
(4b) jede Eingabe x, für die die Boole'sche Funktion f 0 ergibt, in $E(x) := (G'(x), 0, ..., 0)$ transformiert wird, wobei

$G'(x)$ durch Wiederholen der Bits der Ausgabe der Fehlerkorrekturcodierung $G(x)$ in einer Anzahl von Malen gebildet wird, die der Anzahl von Malen entspricht, in der sie als Eingaben einiger $\{C_i\}_{i \in I}$ erscheinen, die durch Schritt (1gb) gegeben sind, und

$Y'_x$ durch Wiederholen der Bits der eindeutigen hinweisenden Zeichenfolge $Y_x$ in einer Anzahl von Malen gebildet wird, die der Anzahl von Malen entspricht, für die sie als Eingaben einiger $\{C_i\}_{i \in I}$ erscheinen, die durch Schritt (1gb) gegeben sind.

5. Verfahren nach Anspruch 4, ferner mit dem Schritt zum Implementieren einer Familie von Bounded Degree Expanders $\{C_j\}_{j \in J}$ in den IC, wobei J ein Indexsatz ist, wobei ein Bounded Degree Expander für jede Gruppe von Bits vorgesehen ist, die identisch sein müssen.

6. Verfahren nach Anspruch 5, wobei Schritt (1h) zum Implementieren einer Kombination der Ausgaben der Schaltungsfamilie durch UND-Gatter ferner die Schritte aufweist:

(6a) Implementieren einer Kombination der Ausgaben der Familie von Bounded Degree Expanders durch UND-Gatter, wobei die UND-Gatter unter Verwendung $\delta$-toleranter Realisierungen von Schwellenfunktionen realisiert werden; und
(6b) Kombinieren der Ausgabe der Kombination der Ausgaben der Schaltungsfamilie durch UND-Gatter gemäß Schritt (1h) und der Ausgabe der Kombination der Ausgaben der Familie von Bounded Degree Expanders durch UND-Gatter gemäß Schritt (6a) durch ein weiteres UND-Gatter, das unter Verwendung $\delta$-toleranter Realisierungen von Schwellenfunktionen realisiert ist.

7. Verfahren nach einem der Ansprüche 1 bis 6, wobei die überwältigende Majoritätsfunktion $Maj_\sigma^\mu$ durch eine Serienschaltung mehrerer Majority-Preserver konstruiert wird, wobei vorzugsweise so viele Majority-Preserver in Serie geschaltet werden, dass die Anzahl von Ausgaben des letzten Majority-Preserver kleiner ist als das Minimum des Kehrwertes von $\alpha$ und des Kehrwertes von $\beta$, und wobei die Ausgabe des letzten Majority-Preserver einer Schaltung zugeführt wird, die weniger als $1/\alpha$ Gatter auf jeder ihrer Ebenen und weniger als $1/\beta$ Verdrahtungen zwischen zwei beliebigen aufeinanderfolgenden Ebenen aufweist und dafür konfiguriert ist, die Majorität seiner Eingaben zu berechnen.

8. Verfahren nach Anspruch 7, wobei jeder der Majority-Preserver einen ersten $\varepsilon$-Halbierer mit m Eingängen und m Ausgängen, einen zweiten $\varepsilon$-Halbierer mit m/2 Eingängen und m/2 Ausgängen und einen dritten $\varepsilon$-Halbierer mit m/2 Eingängen und m/2 Ausgängen aufweist, wobei:

der obere Teil der Ausgabe des ersten $\varepsilon$-Halbierers dem Eingang des zweiten $\varepsilon$-Halbierers zugeführt wird, und
der untere Teil der Ausgabe des ersten $\varepsilon$-Hal-

bierers dem Eingang des dritten ε-Halbierers zugeführt wird,

wobei vorzugsweise der erste ε-Halbierer, der zweite ε-Halbierer und der dritte ε-Halbierer den gleichen Parameter ε und die gleiche Tiefe $c$ aufweisen.

9. Fehlertolerante integrierte Schaltung, die zum Berechnen einer Boole'schen Funktion $f$ konfiguriert ist, mit δ-toleranten Realisierungen von Schwellenfunktionen, wobei jede der δ-toleranten Realisierungen einer Schwellenfunktion $\mathrm{Th}_{\kappa}^{\nu}$, wobei v und κ ganze Zahlen sind, aufweist:

ein Vergleichernetzwerk $K_l$ mit v Eingängen und $\mu = v/2^{\tau}$ Ausgängen, wobei die ganze Zahl τ mit der binären Länge einer ganzen Zahl λ in Beziehung steht, wobei beide ganzen Zahlen λ und τ derart gewählt sind, dass die Bedingungen $\lambda v/2^{\tau} \geq v - \kappa$ und $(\lambda+1)v/2^{\tau} \leq v - \kappa + \delta v$ gleichzeitig erfüllt sind;
eine Implementierung der überwiegenden Majoritätsfunktion $\mathrm{Maj}_{\sigma}^{\mu}$, die als Eingabe die Ausgabe des Vergleichernetzwerks $K_1$ verwendet, wobei die Majoritätsfunktion unter Verwendung von Implementierungen von ε-Halbierern realisiert ist, und wobei $\sigma = (1-2^{\tau}(\varepsilon+\alpha+2\beta+2c\gamma))\mu$ ist, wobei c die Tiefe der ε-Halbierer darstellt, und die Parameter ε, α, β und γ = α + β durch $1-2^{\tau}(\varepsilon+\alpha+2\beta+2c\gamma) \geq 3/4 + c\gamma$ bestimmt sind, wobei δ > 0 eine vorgegebene Toleranz ist, α eine vorgegebene Gatter-Fehlertoleranz, wobei 0 < α < 1 ist, gemäß dem maximalen Anteil der Gatter ist, die auf jeder Ebene der fehlertoleranten Boole'schen Schaltung fehlerhaft sein dürfen, und β eine vorgegebene Verdrahtungsfehlertoleranz, wobei 0 < β < 1 ist, gemäß dem maximalen Anteil der Verdrahtungen ist, die zwischen zwei beliebigen aufeinanderfolgenden Ebenen der fehlertoleranten Boole'schen Schaltung fehlerhaft sein dürfen, zusammengesetzt gemäß dem Verfahren nach einem der Ansprüche 1 bis 8.

10. System mit einer Einrichtung zum Konstruieren einer fehlertoleranten integrierten Schaltung gemäß dem Verfahren nach einem der Ansprüche 1 bis 8, wobei das System vorzugsweise einen Computer aufweist.

**Revendications**

1. Procédé exécuté par ordinateur pour la construction d'un circuit intégré IC tolérant aux erreurs, comprenant une pluralité de portes et une pluralité de fils, procédé comprenant les étapes suivantes :

(1a) prévision d'une fonction booléenne $f$ à réaliser en tant que circuit booléen tolérant aux erreurs à l'intérieur de IC ;
(1b) prévision d'un relâchement δ > 0 ;
(1c) prévision d'une tolérance aux erreurs de porte α avec 0 < α < 1 en fonction de la fraction maximale des portes autorisées à être défaillantes à chaque niveau du circuit booléen tolérant aux erreurs ;
(1d) prévision d'une tolérance aux erreurs de fil β avec 0 < β < 1 en fonction de la fraction maximale des fils autorisés à être défaillants entre deux niveaux consécutifs du circuit booléen tolérant aux erreurs ;
(1e) constat si la fonction booléenne $f$ est une fonction symétrique ;

si la fonction booléenne $f$ est une fonction symétrique :

(1f) conception d'une réalisation par un circuit booléen tolérant aux erreurs de la fonction booléenne $f$ en recourant à des réalisations à relâchement δ de fonctions de seuil ; sinon :
(1g) implémentation d'une famille de circuits booléens ;
(1h) implémentation d'une combinaison des sorties de la famille de circuits par des portes ET, les portes ET étant réalisées en recourant à des réalisations à relâchement δ de fonctions de seuil,

ledit procédé étant **caractérisé en ce que** chacune des réalisations à relâchement δ d'une fonction de seuil $Th_{\kappa}^{\nu}$, v et κ étant les deux des nombres entiers, comprend :

un réseau comparateur $K_1$ avec v entrées et $\mu = v/2^{\tau}$ sorties, le nombre entier τ se rapportant à la longueur binaire d'un nombre entier λ, les deux nombres entiers λ et τ étant choisis de manière à satisfaire simultanément aux conditions $\lambda v/2\tau \geq v - \kappa$ et $(\lambda+1)v/2^{\tau} \leq v-\kappa+\delta v$;
une implémentation de la fonction de grande majorité $Maj_{\sigma}^{\mu}$ prenant comme entrée la sortie du réseau comparateur $K_1$, la fonction de majorité étant réalisée en recourant à des implémentations de diviseurs par 2 ε, et $\sigma = (1 - 2^{\tau}(\varepsilon + \alpha + 2\beta + 2c\gamma))\mu$ avec c représentant la profondeur des diviseurs par 2 ε, et des paramètres ε, α, β, et γ = α + β étant déterminés par $1 - 2^{\tau}(\varepsilon + \alpha + 2\beta + 2c\gamma) \geq 3/4 + c\gamma$;

où l'étape (1f) de conception d'une réalisation par un circuit booléen tolérant aux erreurs de la fonction booléenne *f* en recourant à des réalisations à relâchement δ de fonctions de seuil comprend les étapes suivantes :

(1fa) description de *f* par une chaîne de longueur *n*+1, *n* étant la longueur de l'entrée de *f*, et le *i*<sup>ème</sup> élément de la chaîne étant 1 si et seulement si la valeur de *f* est 1 sur des entrées contenant exactement *i* 1 ;

si chaque ensemble de 0 successifs dans la chaîne a une longueur inférieure à δ*n* :

(1fb) conception du circuit booléen de manière à configurer celui-ci pour sortir un 1 pour chaque entrée ;

si dans la chaîne sont présents *h* ensembles de 0 successifs ayant une longueur supérieure ou égale à δ*n*, *h* étant au moins 1 :

(1fc) implémentation, pour chaque ensemble *i* ∈ {1, ..., *h*} des *h* ensembles de 0 successifs, d'une réalisation à relâchement δ d'une première fonction de seuil niée $\neg Th_{l_i}^n$ et d'une réalisation à relâchement δ d'une deuxième fonction de seuil $T_{u_i}^n$, *l_i* représentant la position la plus basse d'un élément du *i*<sup>ème</sup> ensemble, et *u_i* représentant la position la plus haute d'un élément du *i*<sup>ème</sup> ensemble ;

(1fd) connexion, pour chaque *i* ∈ {1, ..., *h*}, de la sortie de l'implémentation de la première fonction de seuil niée $\neg Th_{l_i}^n$, et de la sortie de l'implémentation de la deuxième fonction de seuil $T_{u_i}^n$, par l'intermédiaire d'une porte ET ;

(1fe) connexion des sorties des portes ET de l'étape (1fd) par l'intermédiaire de portes OU;

la famille de circuits $\{C_i\}_{i \in I}$ avec *I* en tant qu'ensemble d'indices conçu en étape (1g) satisfaisant aux conditions suivantes :

(a) les circuits de la famille de circuits $\{C_i\}_{i \in I}$ sont de taille constante ;
(b) chaque circuit $C_i$ de la famille prend comme entrée une codage de correction d'erreur *G(x)* et une chaîne de conseil *Y*, *x* étant une entrée de la fonction booléenne *f* ;
chaque circuit $C_i$ de la famille étant configuré de telle manière que :
(c) pour tout *x* que la fonction booléenne *f* évalue à 1 est présentée une chaîne de conseil *Y* telle que pour tout *i* ∈ *I*: $C_i(G(x), Y) = 1$,

(d) pour tout *x* que la fonction booléenne *f* évalue à 0, et pour chaque chaîne de conseil *Y*, il est satisfait à $Prob_{i \in I} [C_i(G(x), Y) = 0] \geq \tilde{\varepsilon}$, pour $\tilde{\varepsilon}$ quelconque ; et

l'étape (1g) de conception d'une famille de circuits $\{C_i\}_{i \in I}$ comprenant l'autre étape de :

(1ga) modification de la famille de circuits $\{C_i\}_{i \in I}$ de telle manière qu'en condition (c), la chaîne de conseil *Y* est unique pour tout *x*, et que la condition (d) est satisfaite pour toute chaîne de conseil *Y*;
(1gb) modification, en outre, de la famille de circuits $\{C_i\}_{i \in I}$ pour que celle-ci contienne tous les membres de la famille de circuits conformément à l'étape (1ga) configurée de telle manière que :

pour tout *x* que la fonction booléenne *f* évalue à 1 est présentée une chaîne de conseil $Y_x$ unique, telle que pour tout *i* ∈ *I*: $C_i(G(x), Y_x) = 1$, et pour tout $\tilde{\delta} > 0$ est présenté $\tilde{\varepsilon} > 0$ tel que $Prob_{i \in I}[C_i(H, Y) = 0] \leq \tilde{\varepsilon}$, impliquant que pour tout *x* que la fonction booléenne *f* évalue à 1, il est satisfait à $d((H, Y), (G(x), Y_x)) \leq \tilde{\delta}|(H, Y)|$;

(1gc) implémentation dans IC de la famille de circuits $\{C_i\}_{i \in I}$ telle qu'obtenue en étape (1gb).

2. Procédé selon la revendication 1, où le réseau comparateur $K_1$ comprend τ diviseurs par 2 ε, chacun des diviseurs par 2 ε ayant une profondeur *c*, les diviseurs par 2 ε au *i*<sup>ème</sup> niveau ayant $v/2^{i-1}$ entrées et $v/2^i$ sorties, et où les diviseurs par 2 ε de deux niveaux consécutifs sont reliés de telle manière qu'avec $\lambda_1, ..., \lambda_\tau$ renvoyant à la représentation binaire du nombre entier λ :

si $\lambda_i = 0$, l'entrée vers le (*i*+1)<sup>ème</sup> diviseur par 2 ε est la part inférieure du *i*<sup>ème</sup> diviseur par 2ε;
si $\lambda_i = 1$, l'entrée vers le (*i*+1)<sup>ème</sup> diviseur par 2 e est la part supérieure du *i*<sup>ème</sup> diviseur par 2 ε.

3. Procédé selon la revendication 1 ou la revendication 2, où la famille de circuits $\{C_i\}_{i \in I}$ est modifiée en outre en ce que la famille est transformée en une famille de circuits synchrones, de telle manière que tous les membres de la famille de circuits synchrones ont des entrées disjointes, et que toutes les sorties sont au même niveau.

4. Procédé selon la revendication 1, 2 ou la revendication 3, comprenant en outre une étape d'implémentation d'un moyen de codage de correction d'erreur dans IC, ledit moyen de codage de correction d'erreur étant configuré pour exécuter une transformation d'une entrée *x* en fonction d'un code de correction d'erreur *E* défini de telle manière que :

(4a) toute entrée *x* que la fonction booléenne *f* évalue à 1 est transformée en *E(x) := (G'(x), Y'ₓ)* ; et
(4b) toute entrée *x* que la fonction booléenne *f* évalue à 0, est transformée en E(*x*) : := *(G'(x), 0, ..., 0)*,

où :

*G'(x)* est formé par répétition des bits de la sortie du codage de correction d'erreur *G(x)* du nombre de fois auquel ceux-ci apparaissent comme entrée vers certains *{Cᵢ}ᵢ∈ᵢ* tel que donné par l'étape (1gb), et
*Y'ₓ* est formé par répétition des bits de la chaîne de conseil unique *Yₓ* du nombre de fois auquel ceux-ci apparaissent comme entrée vers certains *{Cᵢ}ᵢ∈ᵢ* tel que donné par l'étape (1gb).

5. Procédé selon la revendication 4, comprenant en outre une étape d'implémentation d'une famille d'expanseurs de degré borné *{Cⱼ}ⱼ∈ⱼ* dans IC, *J* étant un ensemble d'indices, un expanseur de degré borné pour chaque groupe de bits ayant à être identiques.

6. Procédé selon la revendication 5, où l'étape (1h) d'implémentation d'une combinaison des sorties de la famille de circuits par des portes ET comprend en outre les étapes suivantes :

(6a) implémentation d'une combinaison des sorties de la famille d'expanseurs de degré borné par des portes ET, les portes ET étant réalisées en recourant à des réalisations à relâchement δ de fonctions de seuil ;
(6b) combinaison de la sortie des combinaison des sorties de la famille de circuits par des portes ET conformément à l'étape (1h) et de la sortie de la combinaison des sorties de la famille d'expanseurs de degré borné par des portes ET conformément à l'étape (6a) par une autre porte ET réalisée en recourant à des réalisations à relâchement δ de fonctions de seuil.

7. Procédé selon l'une des revendications 1 à 6, où la fonction de grande majorité $Maj_\sigma^\mu$ est construite par connexion en série de plusieurs conservateurs de majorité, autant de conservateurs de majorité étant préférentiellement reliés en série que le nombre de sorties du dernier conservateur de majorité est inférieur au minimum de la valeur réciproque de α et de la valeur réciproque de β, et où la sortie du dernier conservateur de majorité est intégrée à un circuit ayant moins de 1/α portes à chacun de ses niveaux et moins de 1/β fils entre deux niveaux consécutifs et configuré pour calculer la majorité de ses entrées.

8. Procédé selon la revendication 7, où chacun des conservateurs de majorité comprend un premier diviseur par 2 ε avec *m* entrées et *m* sorties, un deuxième diviseur par 2 ε avec *m*/2 entrées et *m*/2 sorties, et un troisième diviseur par 2 ε avec *m*/2 entrées et *m*/2 sorties, où :

la part supérieure de la sortie du premier diviseur par 2 ε est intégrée à l'entrée du deuxième diviseur par 2 ε, et
la part inférieure de la sortie du premier diviseur par 2 ε est intégrée à l'entrée du troisième diviseur par 2 ε ;
le premier diviseur par 2 ε, le deuxième diviseur par 2 ε et le troisième diviseur par 2 e ayant préférentiellement le même paramètre ε et la même profondeur *c*.

9. Circuit intégré tolérant aux erreurs configuré pour calculer une fonction booléenne *f*, comprenant des réalisations à relâchement δ de fonctions de seuil, où chacune des réalisations à relâchement δ d'une fonction de seuil $Th_\kappa^\nu$, *ν* *v* et *κ* étant les deux des nombres entiers, comprend :

un réseau comparateur *K₁* avec *v* entrées et μ = *v*/2^τ sorties, le nombre entier τ se rapportant à la longueur binaire d'un nombre entier λ, les deux nombres entiers λ et τ étant choisis de manière à satisfaire simultanément aux conditions λ*v*/2^τ ≥ *v* - *κ* et *(λ+1)v*/2^τ ≤ *v* - *κ* + *<3v* ;
une implémentation de la fonction de grande majorité $Maj_\sigma^\mu$ prenant comme entrée la sortie du réseau comparateur *K₁*, la fonction de majorité étant réalisée en recourant à des implémentations de diviseurs par 2 ε, et σ = (1 - 2^τ(ε + α + 2β + 2c*γ*))μ avec *c* représentant la profondeur des diviseurs par 2 ε, et des paramètres ε, α, β, et *γ* = α + β étant déterminés par 1 - 2^τ (ε + α + 2β + 2c*γ*) ≥ 3/4 + c*γ*, δ > 0 étant un relâchement prédéfini ; α étant une tolérance aux erreurs de porte prédéfinie avec 0 < α < 1 en fonction de la fraction maximale des portes autorisées à être défaillantes à chaque niveau du circuit booléen tolérant aux erreurs ; et β étant une tolérance aux erreurs de fil prédéfinie avecc 0 < β < 1 en fonction de la fraction maximale des fils autorisés à être défaillants entre deux niveaux consécutifs du circuit booléen tolérant aux erreurs, assemblé conformément au procédé selon l'une des revendications 1 à 8.

**10.** Système comportant des moyens pour la construction d'un circuit intégré tolérant aux erreurs conformément au procédé selon l'une des revendications 1 à 8, ledit système comprenant préférentiellement un ordinateur.

## Fig. 1

◻Metal 1  ▨Metal 2  ▦Metal 3

## Fig. 2

Fig. 3

Fig. 4

Fig. 5

Fig. 6

Fig. 7

| $x$ | $y$ | $s$ | $c$ |
|-----|-----|-----|-----|
| 0 | 0 | 0 | 0 |
| 0 | 1 | 1 | 0 |
| 1 | 0 | 1 | 0 |
| 1 | 1 | 0 | 1 |

Fig. 8

Fig. 9

Fig. 10

Start

Input:
Boolean function $f$
and the
corresp. circuit $C$

$f$ is a
symmetric
function

yes

Fault-tolerant circuit construction
for symmetric functions
(according to Section "Construction
of a fault-tolerant circuit that
computes a symmetric
function $f$ in a $\delta$-loose manner"),
based on constructions
described in Section
"Construction of a fault-tolerant
circuit that computes the threshold
function $Th_k^n$ in a $\delta$-loose manner"

no

Fault-tolerant circuit construction
for arbitrary Boolean functions
(according to Section "Construction
of a fault-tolerant circuit that
computes an arbitrary Boolean
function $f$ with encoded input in a
$\delta$-loose manner"), based on
constructions described in Section
"Construction of a fault-tolerant
circuit that computes the threshold
function $Th_k^n$ in a $\delta$-loose manner"

End

# Fig. 11

Fig. 12

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- An O(n log n) sorting network. **M. AJTAI ; J. KOMLÓS ; E. SZEMERÉDI.** Proceedings of the fifteenth annual ACM Symposium on Theory of Computing. ACM, 1983, vol. 129, 1-9
- **S. ARORA ; B. BARAK.** Computational Complexity: A Modem Approach. Cambridge University Press, 2009, vol. 6
- Proof verification and hardness of approximation problems. **S. ARORA ; C. LUND ; R. MOTWANI ; M. SUDAN.** Proceedings., 33rd Annual Symposium on Foundations of Computer Science. Ieee, 1992, 14-23
- Probabilistic Checking of Proofs. **S. ARORA ; S. SAFRA.** Proceedings of the 33rd IEEE Symposium on Foundations of Computer Science. 1992, 2-13
- Fault tolerant sorting network. **S. ASSAF ; E. UPFAL.** Proceedings of 31st IEEE Symposium on Foundations of Computer Science. IEEE Comput. Soc. Press, 1990, 275-284
- **R. DOBRUSHIN ; S. ORTYUKOV.** Upper bound on the redundancy of self-correcting arrangements of unreliable functional elements. *Problems of Information Transmission,* 1977, vol. 13 (3), 203-218
- **A. GÁL ; M. SZEGEDY.** Fault tolerant circuits and probabilistically checkable proofs. *Proceedings of Structure in Complexity Theory. 10th Annual IEEE Conference,* 1995, 65-73
- **S. HOORY ; N. LINIAL ; A. WIGDERSON.** Expander graphs and their applications. *Bulletin of the American Mathematical Society,* August 2006, vol. 43 (04), 439-562
- **R. KARRI ; J. RAJENDRAN ; K. ROSENFELD ; M. TEHRANIPOOR.** Trustworthy Hardware: Identifying and Classifying Hardware Trojans. *IEEE Computer Magazine,* 2010, vol. 43 (10), 39-46
- **F. J. MACWILLIAMS ; N. J. A. SLOANE.** *The Theory of Error-Correcting Codes,* 1977, vol. 16
- **N. PIPPENGER.** On networks of noisy gates. *Proceedings of 26th IEEE Symposium on the Foundations of Computer Science,* 1985, 30-36
- **L. VALIANT ; V. VAZIRANI.** NP is as easy as detecting unique solutions. *Theoretical Computer Science,* 1986, vol. 47 (3), 85-93
- Probabilistic logics and the synthesis of reliable organisms from unreliable components. **J. VON NEUMANN.** Automata Studies. Princeton University Press, 1956, vol. 34, 329-378